# DEMANDE DE BREVET EUROPEEN

(11) **EP 0 797 189 A1**
(43) Date de publication de la demande: **24.09.1997**
(21) Numéro de dépôt: 97400296.6
(22) Date de dépôt: 10.02.1997
(51) Int. Cl.: G11B 5/39

(54) **Procédé de réalisation d'une tête magnétique à élement magnétorésistant et tête obtenue par ce procédé**

(30) Priorité: 19.03.1996 FR 9603391
(71) Demandeur: SILMAG, 38524 Saint-Egrève Cedex (FR)
(72) Inventeur: Lazzari, Jean-Pierre, 38700 Corenc (FR); Jalaguier, Eric, 38410 St Martin D'Uriage (FR)
(74) Mandataire: Signore, Robert

(57) **Abrégé**

Un élément magnétorésistant (MR) est disposé sous l'espaceur amagnétique et entre les pièces polaires (72₁, 72₂).

Application à l'enregistrement magnétique.

## Description

### Domaine technique

La présente invention a pour objet un procédé de réalisation d'une tête magnétique à élément magnétorésistant et une tête magnétique obtenue par ce procédé.

Elle trouve une application dans l'enregistrement magnétique.

### Etat de la technique antérieure

On connaît des têtes magnétiques réalisées dans une technique dite horizontale à couches minces. De telles têtes sont décrites dans le document FR-A-2 645 314 (ou dans son correspondant américain US-A-5,208,716). Une tête de ce genre est présentée sur la figure 1 annexée.

Sur cette figure, on voit, en coupe, une tête horizontale comprenant un substrat semiconducteur 10, par exemple en silicium, dans lequel a été gravé un caisson 12. Dans ce caisson, une couche magnétique inférieure 14 a été formée électrolytiquement et a été prolongée par deux piliers 16₁, 16₂. Un bobinage conducteur 18 entoure les piliers. Ce bobinage est noyé dans une couche isolante 20. Le circuit magnétique se complète par une pièce magnétique supérieure comprenant deux pièces polaires 22₁, 22₂ séparées par un espaceur amagnétique 24. Un élément magnétorésistant MR, par exemple en fer-nickel, est disposé sous l'espaceur amagnétique 24, dans l'isolant 20. La tête se déplace devant un support magnétique 30 où sont enregistrées les informations à lire ou à écrire.

Le fonctionnement d'une telle tête est schématiquement le suivant.

A l'écriture, le courant circulant dans le bobinage 18 crée un champ magnétique et, par conséquent, une induction dans le circuit magnétique. Les lignes de champ qui s'épanouissent autour de l'espaceur induisent une aimantation dans le support 30.

A la lecture, une information magnétique enregistrée dans le support 30 produit un champ magnétique de lecture et, par conséquent, une induction dans le circuit magnétique. Cette induction se referme, en partie, à travers l'élément magnétorésistant MR. Il en résulte une rotation d'aimantation dans cet élément, qui va provoquer une variation de sa résistance. En faisant circuler un courant dans cet élément, on pourra mesurer sa variation de résistance et, en conséquence, retrouver l'information lue.

Une variante de ces têtes consiste à ajouter entre les piliers et les pièces polaires deux pièces magnétiques constituant des concentrateurs de flux. De telles têtes sont décrites dans FR-A-2 712 420 et dans FR-A-2 709 855.

Bien que donnant satisfaction à certains égards, de telles têtes présentent un inconvénient lié à la position de l'élément magnétorésistant par rapport à l'entrefer. Cet élément est, en effet, situé sous le niveau-général des pièces polaires. Il en résulte une faible efficacité en lecture, car une partie seulement du flux magnétique de lecture se referme par l'élément magnétorésistant. Par ailleurs, dans bien des cas, et notamment dans celui des magnétorésistances multicouches à effet magnétorésistant géant (dites encore à vannes de spin ou "spin-valves" en terminologie anglosaxonne). Il est nécessaire que la largeur de l'élément soit le plus faible possible pour réduire le champ démagnétisant. Mais se pose alors le problème de l'alignement correct de cet élément par rapport à l'entrefer.

Le but de l'invention est justement de résoudre ce double problème technique.

### Exposé de l'invention

A cette fin, l'invention propose un procédé de réalisation d'une tête magnétique qui permet de placer l'élément magnétorésistant dans l'entrefer lui-même, c'est-à-dire entre les deux pièces polaires et non plus sous le niveau de celles-ci. Par ailleurs, le procédé permet un alignement automatique de l'élément magnétorésistant par rapport à l'entrefer.

Cet objectif est atteint, selon l'invention, de la manière suivante. On commence par réaliser un sous-ensemble classique comprenant une partie de circuit magnétique. Le procédé de l'invention se poursuit alors par les opérations suivantes :
- on forme sur ce sous-ensemble un empilement de couches en déposant successivement une première couche métallique, une première couche isolante, une couche magnétorésistante, une seconde couche isolante et enfin une seconde couche métallique,
- on forme sur cet empilement un mur isolant comprenant au moins un espaceur amagnétique,
- en prenant ce mur comme masque, on grave l'empilement de couches jusqu'à atteindre la première couche métallique prise comme couche d'arrêt, ce qui laisse subsister, sur la première couche métallique et sous le mur, un empilement gravé comprenant un élément magnétorésistant intercalé entre un premier et un second rubans isolants,
- on prend la première couche métallique subsistant comme électrode et l'on forme, par croissance électrolytique, une pièce magnétique supérieure composée de deux pièces polaires séparées par l'espaceur amagnétique, l'élément magnétorésistant se trouvant ainsi autoaligné avec ledit espaceur et inséré entre les deux pièces polaires.

Dans un premier mode de mise en oeuvre de ce procédé, on forme un mur qui ne comprend qu'une paroi amagnétique. La largeur de l'élément magnétorésistant subsistant après gravure est alors égale à celle de l'espaceur amagnétique.

Dans un second mode de mise en oeuvre, on forme un mur qui comprend deux parois verticales en matériau isolant encadrant une paroi verticale en matériau amagnétique, et, après avoir gravé l'empilement de couches en prenant ces trois parois comme masque, on grave les deux parois verticales isolantes de part et d'autre de la paroi amagnétique pour ne laisser subsister que la paroi amagnétique. La largeur de l'élément magnétorésistant subsistant est alors supérieure à celle de l'espaceur amagnétique.

La présente invention a également pour objet une tête magnétique obtenue par ce procédé. Cette tête est du genre de celles qui comprennent un circuit magnétique avec deux pièces polaires séparées par un espaceur amagnétique et un élément magnétorésistant. La tête de l'invention est caractérisée par le fait que l'élément magnétorésistant est situé entre les deux pièces polaires et est autoaligné avec l'espaceur amagnétique.

### Brève description des dessins

- la figure 1, déjà décrite, montre une tête magnétique en couches minces connue dont l'élément magnétorésistant est situé sous les pièces polaires ;
- la figure 2 illustre une étape préliminaire du procédé de l'invention ;
- la figure 3 montre un empilement de cinq couches, dont une couche en matériau magnétorésistant ;
- la figure 4 illustre une opération de dépôt d'une couche de résine ;
- la figure 5 illustre une étape de photolithographie ;
- la figure 6 illustre une étape de dépôt d'un film isolant ;
- la figure 7 illustre une opération de gravure ;
- la figure 8 montre l'espaceur amagnétique finalement obtenu ;
- la figure 9 illustre une opération de gravure de l'empilement ;
- la figure 10 illustre l'opération de dépôt d'une couche isolante sur la tranche de l'empilement gravé ;
- la figure 11 illustre l'opération de croissance électrolytique de la pièce magnétique supérieure ;
- la figure 12 montre, en coupe, la tête magnétique complète dans un premier mode de réalisation ;
- la figure 13 illustre une étape de dépôt de silicium sur une marche de résine ;
- la figure 14 Illustre une opération de gravure verticale ;
- la figure 15 montre le dépôt d'une couche de matériau isolant amagnétique ;
- la figure 16 montre un mur composé d'un espaceur amagnétique encadré par deux parois de silicium ;
- la figure 17 illustre l'opération de gravure de l'empilement en prenant le mur comme masque ;
- la figure 18 montre le dépôt d'une couche de résine ;
- la figure 19 montre l'espaceur amagnétique et l'empilement gravé dont les flancs ont été recouverts d'isolant ;
- la figure 20 illustre l'opération de croissance électrolytique de la couche magnétique supérieure ;
- la figure 21 montre, en coupe, la tête magnétique finalement obtenue selon un deuxième mode de réalisation.

### Exposé détaillé de modes de réalisation

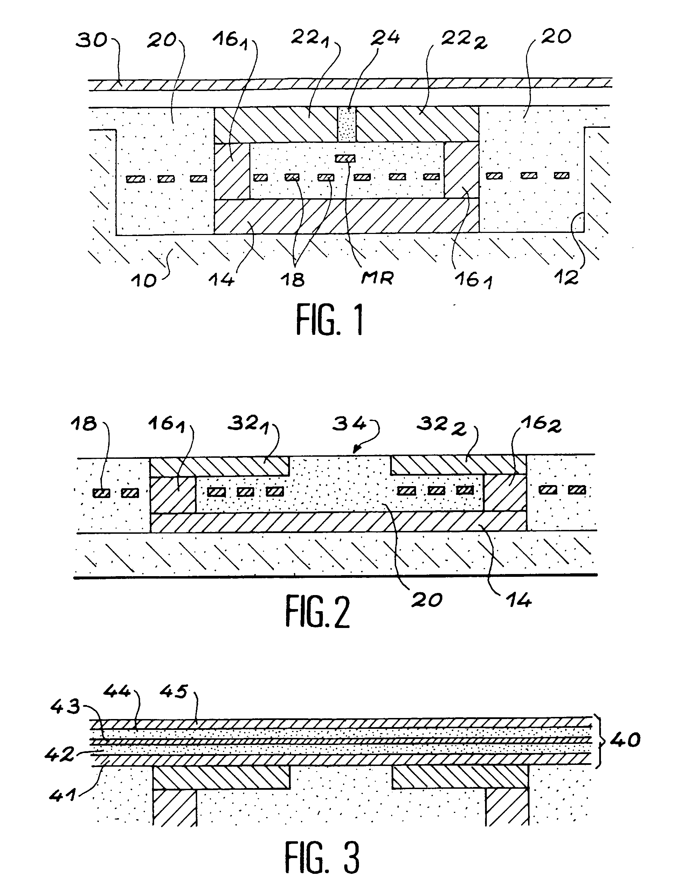

Avant de mettre en oeuvre les opérations spécifiques à l'invention, on réalise un sous-ensemble tel que celui qui est représenté sur la figure 2. Ce sous-ensemble comprend une pièce magnétique inférieure 14, deux piliers magnétiques 16₁, 16₂ et deux concentrateurs 32₁, 32₂. Un bobinage conducteur 18 entoure les piliers 16₁, 16₂. L'ensemble est noyé dans un isolant 20. Ce sous-ensemble présente une surface supérieure plane 34, sur laquelle différentes couches vont être déposées et gravées selon l'invention.

Comme illustré sur la figure 3, on commence par déposer sur la surface 34 un empilement 40 de couches comprenant successivement une première couche métallique 41, une première couche isolante 42, une couche magnétorésistante 43, une seconde couche isolante 44 et enfin une seconde couche métallique 45.

La première couche 41, en matériau conducteur, doit présenter une bonne adhérence, et doit se graver sélectivement par rapport à un isolant comme la silice. De nombreux matériaux peuvent être utilisés à cette fin, comme le tungstène, le chrome, le titane, etc... Dans la suite, on supposera que l'on a choisi le tungstène. L'épaisseur de cette couche peut être une fraction de micromètre. Le matériau de la seconde couche 42 doit pouvoir être gravé sélectivement par rapport à la sous-couche métallique 41. Il peut s'agir, par exemple, de la silice SiO₂. C'est sur cette couche isolante, par exemple en silice, qu'est déposée la couche qui va constituer l'élément magnétorésistant. Cette couche peut être en tout matériau magnétorésistif. Il peut s'agir notamment de multicouches.

La seconde couche isolante 44 peut être identique à la première, 42, et la seconde couche métallique 45 identique à la première, 41, c'est-à-dire respectivement en silice et en tungstène, par exemple.

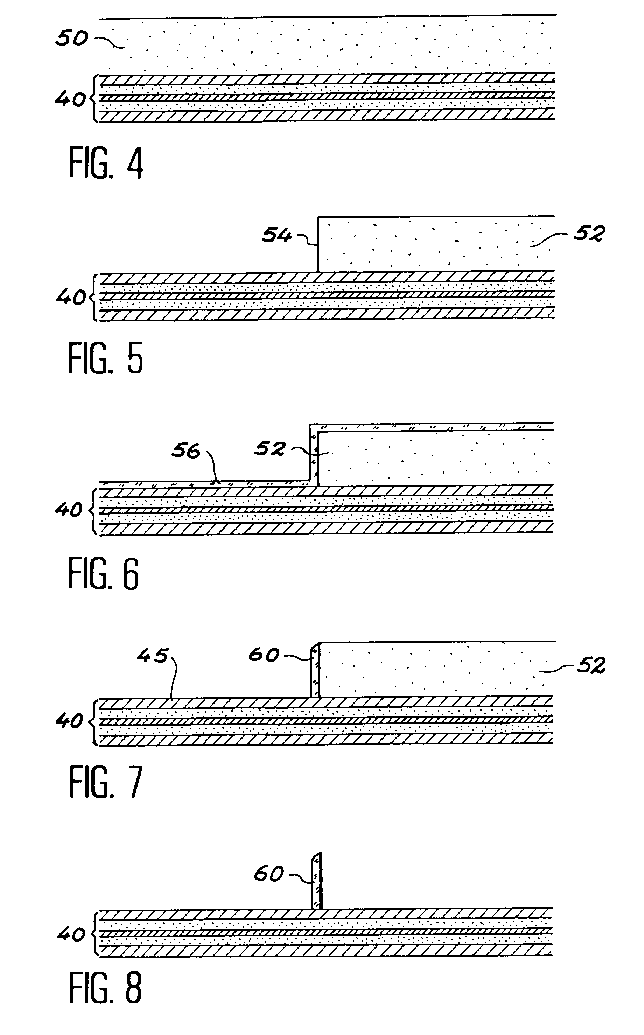

Sur cet empilement 40, et comme représenté sur la figure 4, on dépose une couche isolante 50, par exemple en résine, de quelques micromètres d'épaisseur. Par une opération de photolithographie, on grave une marche 52 avec une contremarche 54, comme illustré sur la figure 5.

Sur l'ensemble et comme représenté sur la figure 6, on dépose ensuite une couche fine d'isolant 56, par exemple par LPCVD ("Low Pressure Chemical Vapor Deposition"). Cette couche se dépose sur les surfaces horizontales, mais également sur la contremarche verticale. L'épaisseur de cette couche doit correspondre à la longueur du futur entrefer, (c'est-à-dire à sa dimension prise dans le sens du déplacement du support d'enregistrement).

Par gravure ionique réactive (RIE), on grave la couche 56, pour faire disparaître les parties horizontales mais laisser subsister une paroi verticale 60 sur la contremarche, comme illustré sur la figure 7. Dans cette opération de gravure, la couche métallique supérieure 45 sert de couche d'arrêt.

On enlève ensuite la marche de résine 52 et l'on obtient un mur vertical 60 tel qu'illustré sur la figure 8.

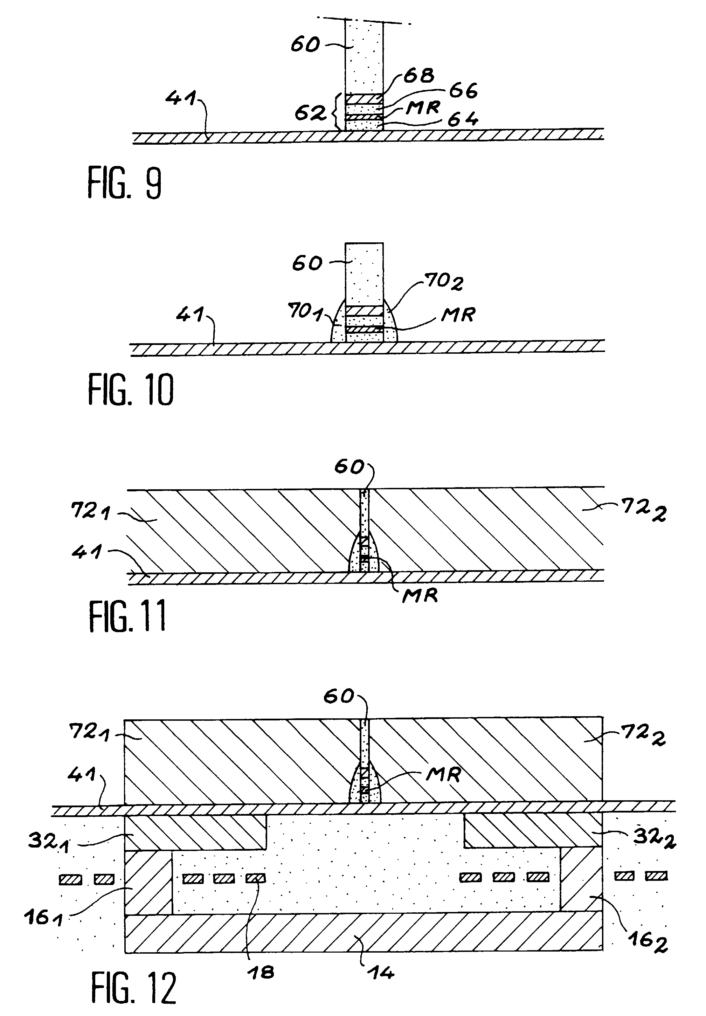

Par gravure ionique (réactive ou non réactive, selon les couches à graver), on attaque ensuite l'empilement de couches 40, à l'exception de la première couche métallique 41. C'est ce qui est illustré sur la figure 9 où le pied de l'espaceur a été agrandi pour plus de clarté. On grave ainsi la deuxième couche métallique 45, qui est en tungstène par exemple ; puis, en changeant de méthode de gravure, on grave la seconde couche isolante 44, qui est par exemple en SiO₂ ; on change encore de méthode de gravure pour graver la couche de matériau magnétorésistant 43 ; on reprend la gravure propre au matériau isolant pour graver la première couche isolante 42, et l'on s'arrête sur la première couche métallique 41, qui est par exemple en tungstène. On obtient alors l'ensemble illustré sur la figure 9 où l'on voit sous le mur 60, un empilement gravé 62 comprenant un premier ruban isolant 64, un ruban magnétorésistant MR, un second ruban isolant 66 et un ruban métallique 68. Du fait de son mode d'obtention par gravure le mur 60 étant pris comme masque, l'ensemble 62, donc l'élément MR, est automatiquement aligné par rapport au mur.

Pour isoler les flancs de l'empilement gravé 62, on dépose ensuite une couche d'isolant (résine, silice, etc...) d'épaisseur supérieure à l'épaisseur de l'empilement 62, et l'on grave cette couche, par exemple en plasma d'oxygène. Il reste alors, sur les flancs de l'empilement gravé, des couches 70₁, 70₂ représentées sur la figure 10.

Prenant ensuite la première couche métallique 41 comme électrode, on fait croître par électrolyse une couche magnétique supérieure formée de deux pièces polaires 72₁, 72₂, qui se forment de part et d'autre du mur 60, lequel va donc constituer l'espaceur amagnétique. C'est ce qui est représenté sur la figure 12. Les deux pièces polaires 72₁, 72₂ peuvent être en fer-nickel par exemple.

On observera attentivement que l'élément magnétorésistant MR, qui est placé par construction, au-dessus de la première couche métallique 41, se retrouve situé au-dessus du niveau inférieur des pièces polaires, autrement dit entre les pièces polaires et non plus sous celles-ci, comme dans l'art antérieur. Cette disposition est très favorable à l'opération de la lecture de l'enregistrement, car les lignes de champ magnétique vont emprunter l'élément magnétorésistant de manière plus efficace.

Le tête magnétique finalement obtenue est représentée sur la figure 12, où les références numériques déjà utilisées désignent les mêmes éléments.

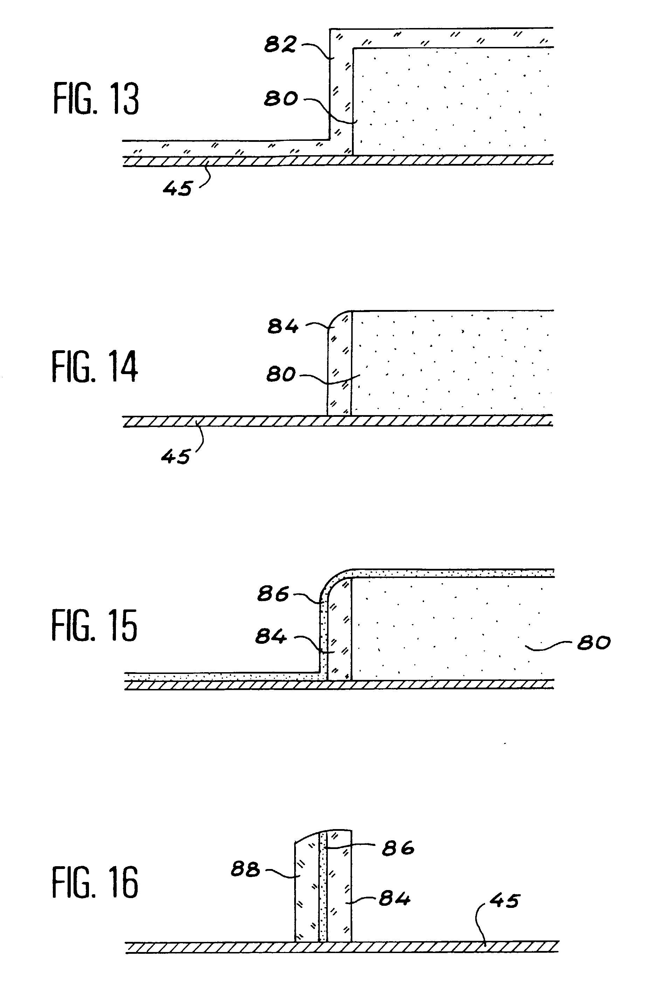

Dans le mode de mise en oeuvre qui vient d'être décrit, la largeur de l'élément magnétorésistant est inférieure ou égale à la dimension de l'entrefer amagnétique comptée dans le sens de déplacement du support d'enregistrement (dimension que l'on nomme généralement "longueur"). Mais l'invention ne se limite à ce cas particulier et englobe aussi le cas où la largeur de l'élément magnétorésistant est supérieure à la longueur de l'entrefer. Ce second mode de mise en oeuvre est illustré sur les figures 13 à 21.

Sur la figure 13 on voit un sous-ensemble analogue à celui de la figure 6, avec une marche 80 et une couche 82 en un matériau devant présenter plusieurs propriétés particulières, à savoir qu'il doit pouvoir être gravé :
- par les techniques permettant d'obtenir une gravure verticale, c'est-à-dire généralement la gravure ionique réactive,
- sélectivement par rapport à l'isolant choisi pour constituer l'espaceur,
- sélectivement par rapport à la seconde couche conductrice supérieure (par exemple du tungstène).

Un matériau répondant à ces exigences est le silicium polycristallin. Ce matériau peut être déposé soit par pulvérisation cathodique, soit par LPCVD avec une bonne couverture de marche.

La couche 82, qui peut donc être en silicium polycristallin, présente une épaisseur sur le flanc comprise entre environ 0,1 micron et quelques microns.

On grave ensuite verticalement cette couche 82 en s'arrêtant sur la seconde couche métallique 45 et l'on obtient une première paroi verticale 84 comme représentée sur la figure 14.

On dépose alors sur l'ensemble, comme représenté sur la figure 15, une couche 86 d'isolant, par exemple en silice SiO₂, dont l'épaisseur le long de la paroi verticale est égale à la longueur du futur entrefer.

On grave verticalement la couche 86 en s'arrêtant encore sur la seconde couche métallique 45. On obtient alors une deuxième paroi verticale 86 plaquée sur le flanc de la première, 84.

On dépose à nouveau une couche d'un matériau identique à celui de la couche 82, donc par exemple en silicium polycristallin et, après gravure verticale comme pour la figure 14, on obtient une troisième paroi verticale 88 en silicium. Les trois parois sont représentées sur la figure 16. La deuxième paroi 86 constitue le futur espaceur amagnétique.

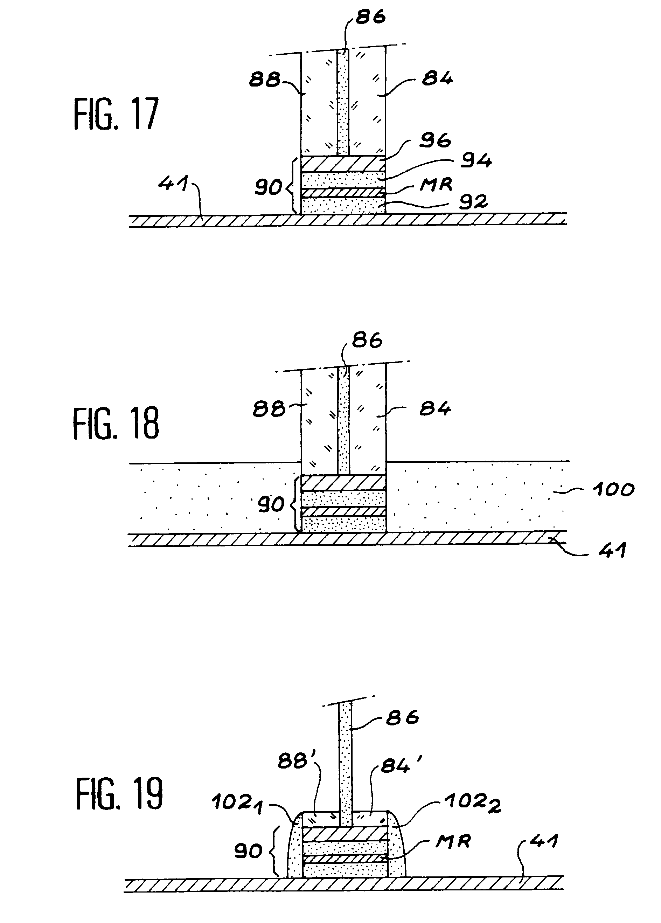

De la même manière que dans la première variante, on utilise ensuite cet ensemble de trois parois verticales 84, 86, 88 comme masque pour graver l'empilement initial 40 de couches métalliques, isolantes et magnétorésistante en prenant la première couche métallique 41 comme couche d'arrêt. On obtient alors la disposition illustrée sur la figure 17, où l'empilement gravé porte la référence 90. Cet empilement gravé est composé d'un premier ruban isolant 92, un ruban magnétorésistant MR et d'un second ruban magnétorésistant 96. Cet empilement présente naturellement une largeur égale à celle de l'ensemble des trois parois verticales 84, 86, 88 et il est donc plus large que le futur espaceur 86.

L'opération suivante consiste à déposer une couche isolante 100, par exemple en résine ou en silice, avec une épaisseur supérieure à celle de l'ensemble gravé (figure 18).

On grave ensuite sélectivement la première et la troisième parois verticales, 84 et 88, toutes deux en silicium polycristallin, par une gravure sélective par rapport au matériau constituant la deuxième paroi 84 qui est en général en silice. Cette gravure s'arrête au plan supérieur de la couche 100. Comme représenté sur la figure 19, il subsiste donc deux pieds 84' et 88' en silicium à la partie inférieure du mur 86 en silice.

En gravant la couche 100 en prenant la seconde couche métallique 41, comme couche d'arrêt il reste deux parois isolantes 102₁, 102₂ représentée sur la figure 19.

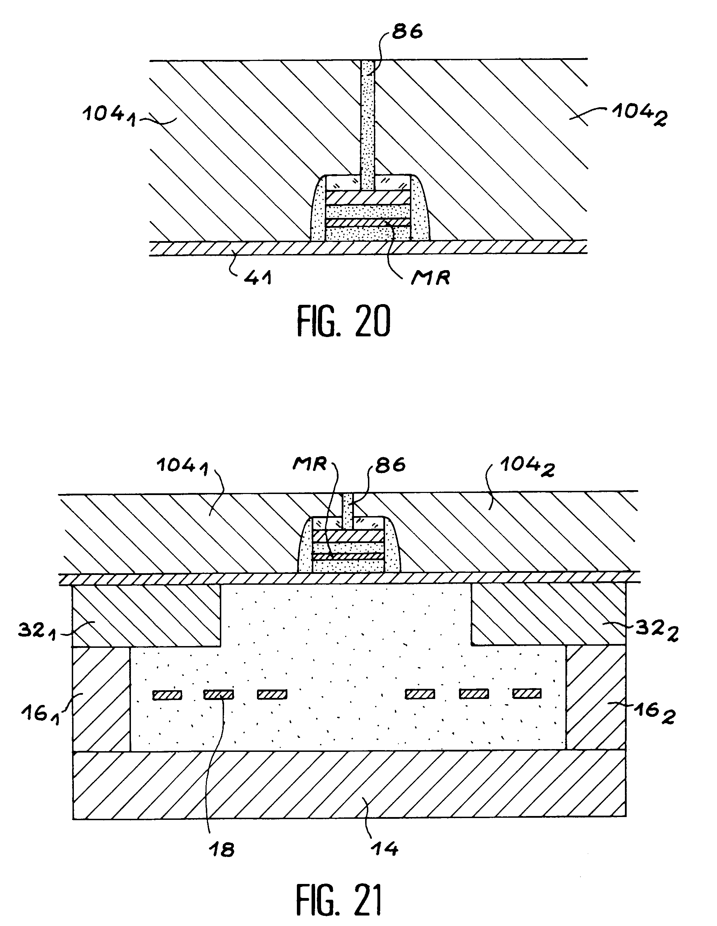

En prenant la couche métallique 41 comme électrode, on fait croître ensuite par électrolyse deux pièces polaires 104₁ et 104₂ représentées sur la figure 20. Ces pièces se trouvent séparées par l'espaceur 86.

La tête magnétique obtenue est représentée en coupe sur la figure 21. On voit que, là encore, l'élément magnétorésistant MR est disposé entre les pièces polaires 104₁, 104₂ et autoaligné avec l'espaceur amagnétique. Dans cette variante, l'élément magnétorésistant MR a une largeur supérieure à celle de l'espaceur 86.

## Revendications

1. Procédé de réalisation d'une tête magnétique, dans lequel on réalise préalablement un sous-ensemble comprenant une partie de circuit magnétique (14, 16₁, 16₂),
ce procédé étant caractérisé par le fait qu'il se poursuit par les opérations suivantes :
- on forme sur ce sous-ensemble un empilement (40) de couches en déposant successivement une première couche métallique (41), une première couche isolante (42), une couche magnétorésistante (43), une seconde couche isolante (44) et enfin une seconde couche métallique (45),
- on forme sur cet empilement (40) un mur isolant (60, 84, 86, 88) comprenant au moins un espaceur amagnétique (60, 86),
- en prenant ce mur comme masque, on grave l'empilement de couches (40) jusqu'à atteindre la première couche métallique (41) prise comme couche d'arrêt, ce qui laisse subsister sur la première couche métallique (41) et sous le mur un empilement gravé (62, 90) comprenant un élément magnétorésistant (MR) intercalé entre un premier (64) et un second (66) rubans isolants,
- on prend la première couche métallique (41) comme électrode et l'on forme, par croissance électrolytique, une pièce magnétique supérieure composée de deux pièces polaires (72₁, 72₂) (104₁, 104₂) séparées par l'espaceur amagnétique (60, 86), l'élément magnétorésistant (MR) se trouvant ainsi autoaligné avec l'espaceur (60, 86) et inséré entre les deux pièces polaires (72₁, 72₂) (104₁, 104₂).

2. Procédé selon la revendication 1, caractérisé par le fait que l'on forme un mur qui ne comprend qu'une paroi amagnétique (60), la largeur de l'élément magnétorésistant (MR) subsistant après gravure étant alors égale à celle de l'espaceur amagnétique (60).

3. Procédé selon la revendication 1, caractérisé par le fait qu'on forme un mur qui comprend deux parois verticales (84, 88) en matériau isolant encadrant une paroi verticale amagnétique (86), et qu'après avoir gravé l'empilement de couches en prenant ces trois parois comme masque, on grave les deux parois isolantes (84, 88) encadrant la paroi amagnétique (86) pour ne laisser subsister que ladite paroi amagnétique (86), la largeur de l'élément magnétorésistant (MR) subsistant étant alors supérieure à celle de l'espaceur amagnétique.

4. Procédé selon la revendication 3, caractérisé par le fait que :
- on dépose sur la deuxième couche métallique (45) une couche isolante (80),
- on grave cette couche isolante (80) pour former une marche (80),
- on dépose sur cette marche (80) une première couche d'un matériau isolant (82),
- on effectue une première gravure verticale en arrêtant la gravure sur la deuxième couche métallique (45) et l'on obtient une première paroi verticale (84),
- on dépose sur l'ensemble une couche (86) de matériau amagnétique,
- on effectue une deuxième gravure verticale de cette couche (86) et l'on obtient une deuxième paroi verticale (86),
- on dépose une seconde couche de matériau isolant,
- on effectue une troisième gravure verticale de cette couche, en arrêtant la gravure sur la deuxième couche métallique (45) et l'on obtient une troisième paroi verticale (88),
- on grave la marche (80) pour laisser subsister un mur vertical avec une première et une troisième parois (84, 88) encadrant une deuxième paroi (86),
- on grave la première et la troisième parois (84, 88) pour ne laisser subsister que la deuxième paroi constituant l'espaceur amagnétique (86).

5. Procédé selon la revendication 4, caractérisé par le fait que l'on choisit le silicium polycristallin pour réaliser la première et la deuxième parois (84, 88) encadrant la paroi amagnétique (86).

6. Procédé selon la revendication 1, caractérisé par le fait que pour recouvrir d'isolant les flancs de l'empilement gravé (62, 90), on dépose sur l'ensemble une couche d'isolant d'épaisseur supérieure à l'épaisseur de l'empilement gravé et on grave cette couche d'isolant en laissant subsister une fine paroi d'isolant sur les flancs de l'empilement gravé (70₁, 70₂) (102₁, 102₂).

7. Procédé selon la revendication 1, caractérisé par le fait que la première (41) et la deuxième (45) couches métalliques sont en tungstène.

8. Procédé selon la revendication 1, caractérisé par le fait que la première (42) et la seconde (44) couches isolantes sont en silice.

9. Procédé selon la revendication 1, caractérisé par le fait que la couche magnétorésistante (43) est une multicouche.

10. Tête magnétique comprenant un circuit magnétique avec deux pièces polaires (22₁, 22₂) séparées par un espaceur amagnétique (24) et un élément magnétorésistant (MR) situé sous l'espaceur amagnétique (24), caractérisée par le fait que l'élément magnétorésistant (MR) est situé entre les deux pièces polaires (72₁, 72₂) (104₁, 104₂) et est autoaligné avec l'espaceur amagnétique (60, 86).

11. Tête magnétique selon la revendication 10, caractérisée par le fait qu'elle comprend une première couche conductrice (41) sur laquelle reposent les deux pièces polaires (72₁, 72₂) (104₁, 104₂), et par le fait que l'élément magnétorésistant (MR) est intercalé entre un premier et un second rubans isolants (64, 66) (92, 94).

12. Tête magnétique selon la revendication 10, caractérisée par le fait que l'élément magnétorésistant (MR) à la même largeur que l'espaceur amagnétique (60, 86).

13. Tête magnétique selon la revendication 10, caractérisée par le fait que l'élément magnétorésistant (MR) est plus large que l'espaceur amagnétique (60, 86).

14. Tête magnétique selon la revendication 10, caractérisée par le fait que l'élément magnétorésistant (MR) est une magnétorésistance multicouche.
